(19) Europäisches Patentamt
European Patent Office
Office européen des brevets

(11) Veröffentlichungsnummer: **0 155 493**
**B1**

(12) **EUROPÄISCHE PATENTSCHRIFT**

(45) Veröffentlichungstag der Patentschrift: **04.11.87**

(51) Int. Cl.[4]: **A 01 N 47/36** //
(A01N47/36, 43:40)

(21) Anmeldenummer: **85101409.2**

(22) Anmeldetag: **11.02.85**

# (54) Herbizide Mittel enthaltend Methabenzthiazuron in Kombination mit bestimmten Pyridinyloxyessigsäure-Derivaten.

(30) Priorität: **24.02.84 DE 3406655**

(43) Veröffentlichungstag der Anmeldung:
**25.09.85 Patentblatt 85/39**

(45) Bekanntmachung des Hinweises auf die Patenterteilung:
**04.11.87 Patentblatt 87/45**

(84) Benannte Vertragsstaaten:
**BE DE FR GB IT NL SE**

(56) Entgegenhaltungen:
**EP-A-0 043 802**
**EP-A-0 101 168**
**DE-A-2 657 583**
**GB-A-2 122 901**

(73) Patentinhaber: **BAYER AG, Konzernverwaltung RP Patentabteilung, D-5090 Leverkusen 1 Bayerwerk (DE)**

(72) Erfinder: **Hack, Helmuth, Dr., Theodor- Storm- Weg 2, D-5068 Odenthal (DE)**
Erfinder: **Schmidt, Robert R., Dr., Im Waldwinkel 110, D-5060 Bergisch- Gladbach 2 (DE)**

**EP 0 155 493 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue herbizide, synergistische Wirkstoffkombinationen, die aus Methabenzthiazuron einerseits und bestimmten Pyridinyloxyessigsäure-Derivaten andererseits bestehen und mit Vorteil zur selektiven Unkrautbekämpfung in Getreidekulturen eingesetzt werden können.

Es ist bereits bekannt geworden, daß N-(2-Benzthiazolyl)-N,N'-dimethylharnstoff herbizide Eigenschaften besitzt (vgl. US-PS-2 756 135). Ferner ist es bekannt, daß der N-(2-Benzthiazolyl)-N,N'-dimethylharnstoff (common name: Methabenzthiazuron) als Selektiv-Herbizid in Getreide verwendet werden kann (vgl. z. B. R. Wegler, Chemie der Pflanzenschutz- und Schädlingsbekämpfungsmittel, Band 5 "Herbizide", Springer-Verlag 1977, S. 145-146; DE-PS-15 42 789). Es hat sich jedoch gezeigt, daß Methabenzthiazuron gegen Galium und einige Ungräser nicht voll wirksam ist.

Ferner ist bekannt, daß bestimmte Pyridinyloxyessigsäure-Derivate, z. B. [(4-Amino-3,5-dichlor-6-fluor-2-pyridinyl)-oxy]-essigsäure, herbizide Eigenschaften besitzen (vgl. z. B. US-PS-4 110 104). Jedoch zeigen auch diese Verbindungen Schwächen bei der Bekämpfung von Galium, und gegen verschiedene Problem-Ungräser, wie z. B. Alopecurus, zeigen sie bei üblichen Aufwandmengen praktisch keine Wirkung.

Es wurde nun überraschend gefunden, daß die neuen Wirkstoffkombinationen bestehend aus

(1) N-(2-Benzthiazolyl)-N,N'-dimethylharnstoff der Formel I

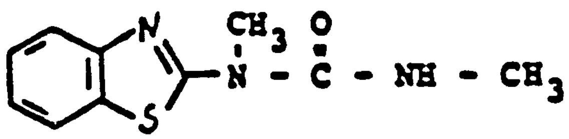

(I)

und

(2) mindestens einem Pyridinyloxyessigsäure-Derivat der allgemeinen Formel

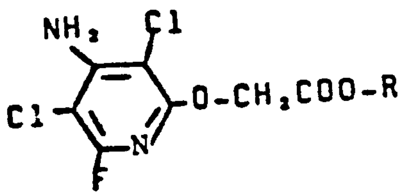

(II)

worin R für Wasserstoff oder einen $C_{1-10}$-Alkylrest steht,

eine besonders hohe herbizide Wirksamkeit aufweisen.

Die neuen Wirkstoffkombinationen zeigen eine nicht vorhersehbare synergistische Wirkung und nicht nur eine Wirkungsergänzung. Die neuen synergistischen Wirkstoffkombinationen sind für Getreidekulturen, z. B. Gerste, Weizen und Roggen, gut verträglich und gegen schwer bekämpfbare Unkräuter und Ungräser, z. B. Alopecurus, Galium und Veronica, besonders gut wirksam. Die neuen Wirkstoffkombinationen stellen somit eine Bereicherung der Selektivherbizide, insbesondere der Getreideherbizide, dar.

Die Pyridinyloxyessigsäure-Derivate der Formel (II) und ihre Herstellung sind bekannt (vgl. z. B. US-PS-4 110 104; vgl. ferner GB-PS-2 082 913 sowie Chemical Abstracts Vol. 96(21), 175 985 j (1981); Vol. 97 (23), 194 493 j (1982); Vol. 99(7), 48 869 m (1983); Vol. 100 (1), 2027 w (1983)).

Bevorzugte Wirkstoffe gemäß der Formel (II) sind die freie Säure (R = H) und die Alkylester mit 1-8 C-Atomen im Alkylteil (R = $C_{1-8}$-Alkyl). Aus dieser Gruppe ist der 1-Methylheptylester der Formel

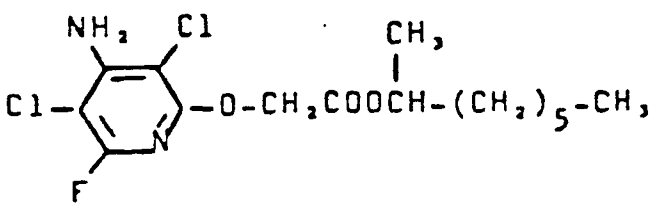

(II-1)

besonders bevorzugt (vgl. M. van Himme et al., Mededeling Fac. Landbouwwet., Rijksuniv. Gent 1981, Nr. 35; ferner Chemical Abstracts Vol. 99 (5) 34 437 g (1983)).

Als Unkräuter, die im allgemeinen als Verunreinigung in Getreidekulturen auftreten und durch die erfindungsgemäßen Wirkstoffkombinationen sicher bekämpft werden können, seien beispielsweise genannt:

<u>dikotyle Unkräuter der Gattungen</u>: Sinapis, Galium, Stellaria, Matricaria, Anthemis, Galinsoga, Chenopodium, Urtica, Senecio, Amaranthus, Convolvulus, Ipomoea, Polygonum, Ambrosia, Cirsium, Sonchus,

Lamium, Veronica, Emex, Galeopsis, Papaver, Centaurea; sowie

monokotyle Unkräuter der Gattungen: Setaria, Phleum, Poa, Agrostis, Alopecurus, Apera, Lolium, Bromus.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Die erfindungsgemäßen Wirkstoffkombinationen weisen bei sehr guter Verträglichkeit gegenüber Getreidekulturen eine hervorragende Wirkung gegen Getreideunkräuter und -ungräser auf. Ihr Einsatz als selektive Getreideherbizide ist daher besonders bevorzugt.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) 0,001 - 2 Gewichtsteile, vorzugsweise 0,01 - 1 Gewichtsteil Wirkstoff aus der Wirkstoffgruppe (II).

Die erfindungsgemäßen Wirkstoffkombinationen können in die üblichen Formulierungen übergeführt werden, wie Lösungen, Emulsionen, Spritzpulver, Suspensionen, Pulver Stäubemittel, Pasten, lösliche Pulver, Granulate, Suspensions-Emulsionskonzentrate, Wirkstoff-imprägnierte Natur- und synthetische Stoffe, Feinstverkapselungen in polymeren Stoffen.

Diese Formulierungen werden in bekannter Weise hergesellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel konnen z. B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z. B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z. B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z. B. nichtionogene und anionische Emulgatoren, wie Polyoxyethylen-Fettsäure-Ester, Polyoxyethylen-Fettalkohol-Ether, z. B. Alkylarylpolyglykolether, Alkylsulfonate, Alkylsulfate, Arylsulfonate sowie Eiweißhydrolysate; als Dispergiermittel kommen in Frage: z. B. Lignin-Sulfitablaugen und Methylcellulose.

Es können in den Formulierungen Haftmittel wie Carboxymethylcellulose, natürliche und synthetische pulverige körnige oder latexförmige Polymere verwendet werden, wie Gummiarabicum, Polyvinylalkohol, Polyvinylacetat.

In den Formulierungen können als weitere Zusätze Farbstoffe wie anorganische Pigmente, zum Beispiel Eisenoxid, Titanoxid, Ferrocyanblau und organische Farbstoffe, wie Alizarin-, Azo-, Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffkombination, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch als Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Getreide-Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchstoffen, Pflanzennährstoffen und Bodenstrukturverbesserungsmitteln ist möglich.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z. B. durch Gießen, Spritzen, Sprühen, Stäuben oder Streuen.

Die Aufwandmengen der erfindungsgemäßen Wirkstoffkombination können in einem gewissen Bereich variiert werden; sie hängen u.a. vom Wetter und von den Bodenfaktoren ab. Im allgemeinen liegen die Aufwandmengen zwischen 0,1 und 10 kg Wirkstoffkombination pro ha, vorzugsweise zwischen 0,2 und 5 kg/ha.

Die erfindungsgemäßen Wirkstoffkombinationen können sowohl vor als auch nach dem Auflaufen der Pflanzen appliziert werden. Die Anwendung wird vorzugsweise nach dem Auflaufen der Pflanzen, also im post-emergence-Verfahren, vorgenommen.

Die gute herbizide Wirkung der neuen Wirkstoffkombinationen geht aus den nachfolgenden Beispielen hervor.

Während die einzelnen Wirkstoffe in der herbiziden Wirkung Schwächen aufweisen, zeigen die Kombinationen eine sehr breite Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebenene Kombination zweier Herbizide kann wie folgt berechnet werden (vgl. COLBY, S. R., "Calculating synergistic and antagonistic responses of herbicide combinations", Weeds 15, Seiten 20-22, 1967):

Wenn X = % Schädigung durch Herbizid A bei p kg/ha Aufwandmenge und
Y = % Schädigung durch Herbizid B bei q kg/ha Aufwandmenge und
E = die erwartete Schädigung der Herbizide A und B, bei p und q kg/ha Aufwandmenge,
dann ist $E = X + Y - \frac{X \cdot Y}{100}$.

Ist die tatsächliche Schädigung größer als berechnet, so ist die Kombination in ihrer Wirkung überadditiv, d.h. sie zeigt einen synergistischen Effekt.

Aus den nachfolgenden Beispielen geht hervor, daß die gefundene herbizide Wirkung der erfindungsgemäßen Wirkstoffkombinationen bei den Unkräutern größer ist als die berechnete, d.h., daß die neuen Wirkstoffkombinationen synergistisch wirken.

**Beispiel 1**

Post-emergence-Test / Freiland

Als Wirkstoffzubereitung wurde eine Tankmischung hergestellt aus Methabenzthiazuron (I), formuliert als 70 %iges Spritzpulver (Handelsprodukt ® TRIBUNIL) und [4-Amino-3,5-dichlor-6-fluor-2-pyridinyl)-oxy]-essigsäure-1-methylheptylester (II-1), formuliert als Emulsionskonzentrat (Versuchsprodukt "EF 381 (250 g/l DOWCO 433)). Die Konzentration der Spritzbrühe wurde so gewählt, daß in 300 l Wasser/ha die jeweils gewünschten Wirkstoffmengen ausgebracht wurden. Analoges gilt für die Ausbringung der Einzel-Wirkstoffe.

Im Freiland wurden Parzellen mit Testpflanzen, welche eine Höhe von etwa 3-10 cm hatten, mit einer solchen Menge der Wirkstoffzubereitung bespritzt, daß die jeweils gewünschten Wirkstoffmengen pro Flächeneinheit ausgebracht wurden. Nach drei Wochen wurde der Schädigungsgrad der Pflanzen bonitiert in % Schädigung im Vergleich zur unbehandelten Kontrolle. Es bedeuten:

0 % = keine Wirkung (wie unbehandelte Kontrolle)
100 % = totale Abtötung

Das Gewichtsverhältnis der Wirkstoffe, Aufwandmengen und Resultate gehen aus den nachfolgenden Tabellen A und B hervor:

**Tabelle A**

post-emergence-Test / Freiland

| Wirkstoff bzw. Wirkstoffkombination | Aufwandmenge kg / ha | Schädigung bzw. Wirkung in % Galium | | Winter-Gerste | |
|---|---|---|---|---|---|
| | | gef.* | ber.* | gef.* | ber.* |
| (I) - bekannt - | 1,75 | 55 | | 0 | |
| (II-1) - bekannt - | 0,2** | 70 | | 0 | |
| (I) + (II-1) - erfindungsgemäß - | 1,75 + 0,2** | 97 | 86,5 | 0 | 0 |

(I) = Methabenzthiazuron
(II-1) = [(4-Amino-3,5-dichlor-6-fluor-2-pyridinyl)-oxy]-essigsäure-1-methylheptylester
* gef. = gefundene Schädigung (in Prozent)
* ber. = nach der COLBY-Formel berechnete Schädigung (in Prozent)
** = jeweils bezogen auf freie Säure

**Tabelle B**

post-emergence-Test / Freiland

| Wirkstoff bzw. Wirkstoffkombination | Aufwandmenge kg / ha | Schädigung bzw. Wirkung in % Alopecurus gef.* | ber.* | Winter-Gerste gef.* | ber.* |
|---|---|---|---|---|---|
| (I) - bekannt - | 2,8 | 40 | | 0 | |
| (II-1) - bekannt - | 0,2** | 0 | | 0 | |
| (I) + (II-1) - erfindungsgemäß - | 2,8 + 0,2** | 65 | 40 | 0 | 0 |

(I) = Methabenzthiazuron
(II-1) [(4-Amino-3,5-dichlor-6-fluor-2-pyridinyl)-oxy]-essigsäure-1-methylheptyl ester
* gef. = gefundene Schädigung (in Prozent)
* ber. = nach der COLBY-Formel berechnete Schädigung (in Prozent)
** - jeweils bezogen auf freie Säure

**Beispiel 2**

Post-emergence-Test / Gewächshaus

Als Wirkstoffzubereitung wurde wiederum eine Tankmischung hergestellt aus Methabenzthiazuron (I), formuliert als 70 %iges Spritzpulver (Handelsprodukt ®TRIBUNIL) und [4-Amino-3,5-dichlor-6-fluor-2-pyridinyl)-oxy]-essigsäure-1-methylheptylester (II-1), formuliert als Emulsionskonzentrat (Versuchsprodukt "EF 381 (250 g/l DOWCO 433)). Die Konzentration der Spritzbrühe wurde so gewählt, daß in 2000 l Wasser/ha die jeweils gewünschten Wirkstoffmengen ausgebracht wurden. Analoges gilt für die Ausbringung der Einzel-Wirkstoffe.

Im Gewächshaus wurden Testpflanzen, welche eine Höhe von etwa 5-15 cm hatten, mit einer solchen Menge der Wirkstoffzubereitung bespritzt, daß die jeweils gewünschten Wirkstoffmengen pro Flächeneinheit ausgebracht wurden. Nach drei Wochen wurde der Schädigungsgrad der Pflanzen bonitiert in % Schädigung im Vergleich zur unbehandelten Kontrolle. Es bedeuten:

0 % = keine Wirkung (wie unbehandelte Kontrolle)
100 % = totale Abtötung

Das Gewichtsverhältnis der Wirkstoffe, Aufwandmengen und Resultate gehen aus der nachfolgenden Tabelle C hervor:

**Tabelle C**

post-emergence-Test / Gewächshaus

| Wirkstoff bzw. Wirkstoffkombination | Aufwandmenge kg / ha | Schädigung bzw. Wirkung in % Avena fatua gef.* | ber.* | Poa annua gef.* | ber.* | Winter-Weizen gef.* | ber.* |
|---|---|---|---|---|---|---|---|
| (I) | 1 | 50 | | 70 | | 0 | |
| - bekannt - | 0,8 | 20 | | 50 | | 0 | |
| (II-1) | 1 | 10 | | 10 | | 10 | |
| - bekannt - | 0,2** | 10 | | 0 | | 0 | |
| (I) + (II-1) - erfindungsgemäß - | 0,2** + 0,8 | 50 | 28 | 90 | 50 | 0 | 0 |

(I) = Methabenzthiazuron
(II-1) = [(4-Amino-3,5-dichlor-6-fluor-2-pyridinyl)-oxy]-essigsäure-1-methylheptylester,
* gef. = gefundene Schädigung (in Prozent)
* ber. = nach der COLBY-Formel berechnete Schädigung (in Prozent)
** = jeweils bezogen auf freie Säure

**Patentansprüche**

1. Selektiv-herbizide Mittel, gekennzeichnet durch einen Gehalt an einer Wirkstoffkombination bestehend aus

(1) N-(2-Benzthiazolyl)-N,N'-dimethylharnstoff (Methabenzthiazuron) der Formel I

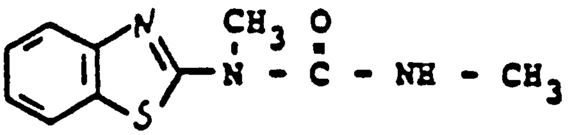

(I)

und

(2) mindestens einem Pyridinyloxyessigsäure-Derivat der allgemeinen Formel

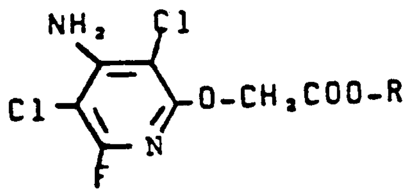

(II)

worin R für Wasserstoff oder einen $C_{1-10}$-Alkyl-rest steht.

2. Selektiv-herbizide Mittel gemäß Anspruch 1, dadurch gekennzeichnet, daß in den Wirkstoffkombinationen das Gewichtsverhältnis von Wirkstoff der Formel (I) zu dem Wirkstoff aus der Gruppe (II) zwischen 1:0,001 und 1:2, vorzugsweise zwischen 1:0,01 und 1:1 liegt.

3. Verfahren zur selektiven Bekämpfung von Unkraut in Getreidekulturen, dadurch gekennzeichnet, daß man eine Wirkstoffkombination gemäß Anspruch 1 nach dem Auflaufen der Pflanzen auf die Getreidefelder einwirken läßt.

4. Verwendung von Wirkstoffkombinationen gemäß Anspruch 1 zur selektiven Bekämpfung von Unkraut in Getreidekulturen.

5. Verfahren zur Herstellung von selektiv-herbiziden Mitteln, dadurch gekennzeichnet, daß man eine Wirkstoffkombination gemäß Anspruch 1 mit Streckmitteln und/oder oberflächenaktiven Mitteln vermischt.

6. Selektiv-herbizide Mittel gemäß Anspruch 1, dadurch gekennzeichnet, daß die Wirkstoffkombination aus Methabenzthiazuron (I) und der Verbindung der Formel (II-1)

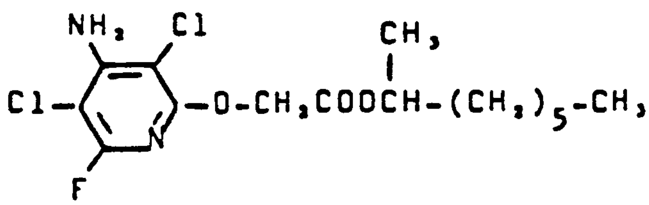

(II-1)

besteht.

**Claims**

1. Selective herbicidal agents, characterised in that they contain an active compound combination consisting of

(1) N-(2-benzthiazolyl)-N,N'-dimethylurea (methabenzthiazuron) of the formula I

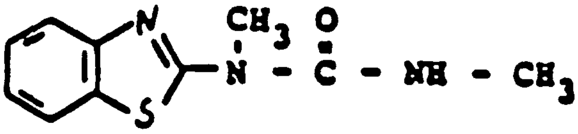

(I)

and

(2) at least one pyridinyloxyacetic acid derivative of the general formula

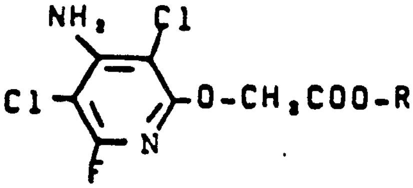

(II)

wherein

R represents hydrogen or a $C_{1-10}$-alkyl radical.

2. Selective herbicidal agents according to Claim 1, characterised in that the weight ratio of active compound of the formula (I) to the active compound from group (II) in the active compound combinations is between 1:0.001 and 1:2, preferably between 1:0.01 and 1:1.

3. Method of selectively combating weeds in cereal crops, characterised in that an active compound combination according to Claim 1 is allowed to act on the cereal fields after emergence of the plants.

4. Use of active compound combinations according to Claim 1 for selectively combating weeds in cereal crops.

5. Process for the preparation of selective herbicidal agents, characterised in that an active compound combination according to Claim 1 is mixed with extenders and/or surface-active agents.

6. Selective herbicidal agents according to Claim 1, characterised in that the active compound combination consists of methabenzthiazuron (I) and the compound of the formula (II-1)

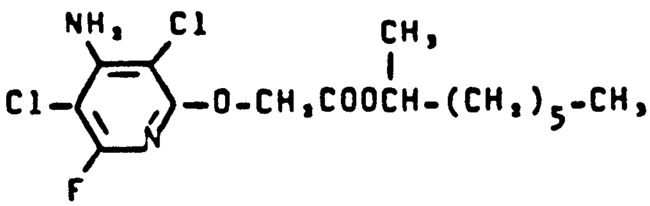

**Revendications**

1. Compositions herbicides sélectives, caractérisées par une teneur en une association de substances actives constituée

(1) de N-(2-benzothiazolyl)-N,N'-diméthylurée (méthabenzthiazuron) de formule I

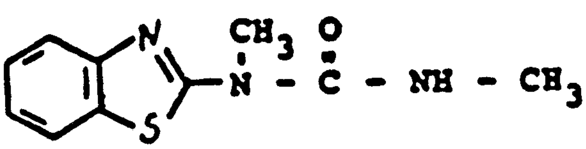

(I)

(2) d'au moins un dérivé d'acide pyridinyloxyacétique de formule générale

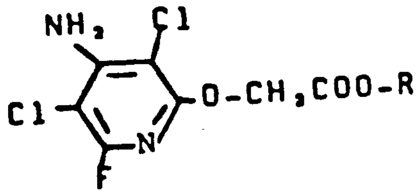

(II)

dans laquelle R représente l'hydrogène ou un reste alkyle en $C_1$ à $C_{10}$.

2. Compositions herbicides sélectives sulivant la revendication 1, caractérisées en ce que dans les associations de substances actives, le rapport du poids de substance active de formule (I) au poids de substance active du groupe (II) se situe entre 1:0,001 et 1:2, de préférence entre 1:0,01 et 1:1.

3. Procédé de lutte sélective contre une mauvaise herbe dans des cultures de céréales, caractérisé en ce ou'on fait agir sur les champs de céréales une association de substances actives suivant la revendication 1 après la levée des plantes.

4. Utilisation d'associations de substances actives suivant la revendication 1 pour la lutte sélective contre une mauvaise herbe dans des cultures de céréales.

5. Procédé de préparation de compositions herbicides sélectives, caractérisé en ce qu'on mélange une association de substances actives suivant la revendication 1 avec des diluants et/ou des agents tensioactifs.

6. Compositions herbicides sélectives suivant la revendication 1, caractérisées en ce que l'association de substances actives est formée de méthabenzthiazuron (I) et du composé de formule (II-1)

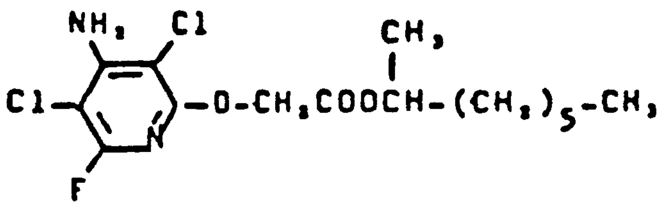

(II-1)

-alkyl rasdcal.

2. Selective herbicidal agents according to Claim 1, characterised in that the weight ratio of active compound of the formula (I) to the active compound from group (II) in the active compound combinations is between 1:0.001 and 1:2 , preferably between 1:0.01 and 1:1.

3. Method of selectively combating weeds in cereal crops, characterised in that an active compound combination according to Claim 1 is allowed to act on the cereal fields after emergence of the plants.

4. Use of active compound combinations according to Claim 1 for selectively combating weeds in cereal crops.

5. Process for the preparation of selective herbicidal agents, characterised in that an active compound combination according to Claim 1 is aixed with extenders and/or surface-active agents.

6. Selective herbicidal agents according to Claim 1, characterised in that the active compound combination consists of methabenzthiazuron (I) and the compound of the formula (II-1)

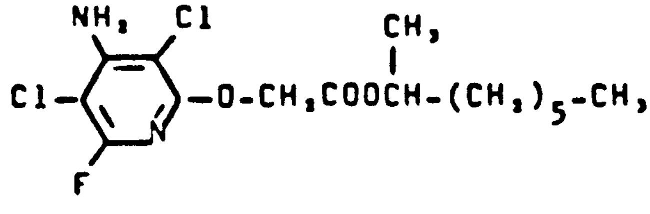

**Revendications**

1. Compositions herbicides sélectives, caractérisées par une teneur en une association de substances actives constituée

(1) de N-(2-benzothiazolyl)-N,N'-diméthylurée (méthabenzthiazuron) de formule I

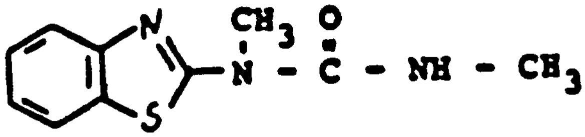

(I)

(2) d'au moins un dérivé d'acide pyridinyloxyacétique de formule générale

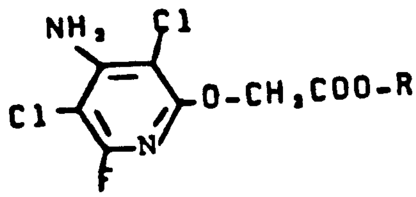

(II)

dans laquelle R représente l'hydrogène ou un reste alkyle en C1 à C10

2. Compositions herbicides selectives suivant la revendication 1, caractérisées en ce que dans les associations de substances actives, le rapport du poids de substance active de formule (I) au poids de substance active du groupe (II) se situe entre 1:0,001 et 1:2, de préférence entre 1:0,01 et 1:1.

3. Procédé de lutte sélective contre une mauvaise herbe dans des cultures de céréales, caractérisé en ce ou'on fait agir sur les champs de céréales une association de substances actives suivant la revendication 1 après la levée des plantes.

4. Utilisation d'associations de substances actives suivant la revendication 1 pour la lutte sélective contre une mauvaise herbe dans des cultures de céréales.

5. Procédé de préparation de compositions herbicides sélectives, caractérisé en ce qu'on mélange une association de substances actives suivant la revendication 1 avec des diluants et/ou des agents tensioactifs.

6. Compositions herbicides sélectives suivant la revendication 1, caractérisées en ce que 1 association de substances actives est formée de méthabenzthiazuron (I) et du composé de formule (II-1)

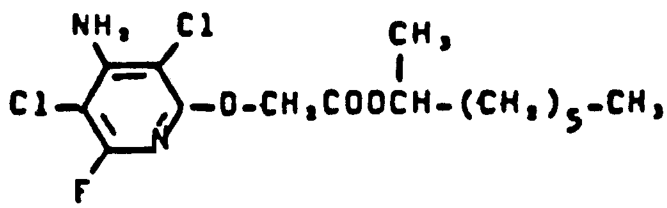

(II-1)